# EUROPÄISCHE PATENTANMELDUNG

(11) **EP 2 637 070 A1**
(43) Veröffentlichungstag der Anmeldung: **11.09.2013**
(21) Anmeldenummer: 12158028.6
(22) Anmeldetag: 05.03.2012
(51) Int. Cl.: G05B 23/02, G05B 19/418

(54) **Überwachungseinrichtung und Verfahren zum Überwachen der Leistung eines Manufacturing Execution Systems**

(71) Anmelder: Siemens Aktiengesellschaft, 80333 München (DE)
(72) Erfinder: Bajric, Albin, 10179 Berlin (DE); Beuth, Matthias, 12439 Berlin (DE); Bindrich, Mike, 10245 Berlin (DE)

(57) **Zusammenfassung**

Es werden ein Verfahren und eine Einrichtung zum Überwachen der Leistung eines Manufacturing Execution Systems (MES) mit einer MES-Datenbank (1) zur Verfügung gestellt.

Es werden:
- in bestimmten Zeitabständen ausgewählte Daten aus der MES-Datenbank (1) ausgelesen und in einer Zwischendatenbank (3) gespeichert;
- die zwischengespeicherten Daten von einer Applikation (7) aus der Zwischendatenbank (3) ausgelesen und bewertet;
- die bewerteten Daten für ein Anzeigen aufbereitet;
- die zum Anzeigen aufbereiteten bewerteten Daten von wenigstens einem Kennzahlen-Cockpit (9) aus der Applikation (7) abgerufen und angezeigt.

## Beschreibung

Die vorliegende Erfindung betrifft ein Verfahren zum Überwachen der Leistung eines Manufacturing Execution Systems (MES) mit einer MES-Datenbank. Daneben betrifft die Erfindung eine Überwachungseinrichtung zur Durchführung des Verfahrens.

Eine industrielle Fertigung erfordert heutzutage eine ausgeklügelte Steuerung und Überwachung des gesamten Fertigungsprozesses. Hierzu dient die Leittechnik, die Datenströme, beispielsweise Signale der Mess-, Steuer- und Regelungstechnik zusammenfasst. Der Begriff "Leittechnik" wird dabei häufig auf die Feldebene, die Steuerungsebene und die Managementebene angewandt. Einzelne Ebenen können dabei weiter unterteilt sein. Beispielsweise wird innerhalb der Leitebene häufig zwischen der Prozessleitebene und der Betriebsleitebene unterschieden.

Die vorliegende Erfindung betrifft die Betriebsleitebene, in der Manufacturing Execution Systeme (MES) zum Einsatz kommen. Um die Leistungsfähigkeit eines solchen MES-Systems zu ermitteln kommen Serverüberwachungsmechanismen sowie die manuelle Prüfung von Systemprotokollen zum Einsatz. Dies erfordert einen erheblichen Aufwand an Zeit und Ressourcen.

Es ist daher Aufgabe der vorliegenden Erfindung, ein Verfahren zum Überwachen der Leistung eines Manufacturing Execution Systems sowie eine Überwachungseinrichtung zur Durchführung des Verfahrens zu schaffen.

Diese Aufgabe wird durch ein Verfahren zum Überwachen der Leistung eines Manufacturing Execution Systems nach Anspruch 1 bzw. durch eine Überwachungseinrichtung nach Anspruch 10 gelöst. Die abhängigen Ansprüche enthalten vorteilhafte Ausgestaltungen der Erfindung.

Im erfindungsgemäßen Verfahren zum Überwachen der Leistung eines Manufacturing Execution Systems (MES) mit einer MES-Datenbank werden in bestimmten Zeitabständen ausgewählte Daten aus der MES-Datenbank ausgelesen und in einer Zwischendatenbank gespeichert. Von einer Applikation werden die zwischengespeicherten Daten aus der Zwischendatenbank ausgelesen und bewertet. Die bewerteten Daten werden für ein Anzeigen aufbereitet. Diese zum Anzeigen aufbereiteten bewerteten Daten werden dann von wenigstens einem Kennzahlen-Cockpit aus der Applikation abgerufen und angezeigt.

Im erfindungsgemäßen Verfahren wird die MES-Datenbank nur von einem einzigen Prozess ausgelesen, welcher die ausgelesenen Daten in eine Zwischendatenbank speichert, auf die dann die erwähnte Applikation zugreift, um die Daten aufzubereiten. Wenn nun von einem Kennzahlen-Cockpit eine Überwachung der Leistung des MES-Systems erfolgt, braucht dieses Cockpit nicht auf die MES-Datenbank selbst, sondern lediglich auf die Applikation als Zwischenebene zuzugreifen. Da dadurch nicht eine Vielzahl von Überwachungsprozessen gleichzeitig auf die MES-Datenbank zugreift, kann das Transferieren enormer Datenmengen in kurzer Zeit durch viele Prozesse vermieden werden, wodurch wiederum Datenstaus und Stopps an einer Stelle des MES-Systems, an der das Gesamtsystem lahm gelegt werden könnte, vermieden werden können.

Außerdem bietet das erfindungsgemäße Verfahren eine einfache Möglichkeit für Mitglieder der Betriebsleitebene jederzeit eine schnelle Aussage über den Gesamtstatus des Manufacturing Execution Systems treffen zu können. Das im Stand der Technik zur Anwendung kommende technische Monitoring der Dienste ist dagegen häufig irreführend und lässt keine klare Aussage zur Gesamtperformance des Manufacturing Execution Systems zu. Eine derartige Überwachung, wie sie im Stand der Technik vorgenommen wird, erfordert daher vom Überwachungspersonal ein erhebliches Maß an Erfahrung, um zu einer Aussage zur Gesamtperformance zu gelangen. Das erfindungsgemäße Verfahren ermöglicht dagegen eine standardisierte und reproduzierbare Überwachung des Systems, die auch weniger erfahrenen Personen eine Aussage über die Systemperformance ermöglicht.

Zwar besteht grundsätzlich die Möglichkeit, dass die zum Anzeigen aufbereiteten bewerteten Daten von einem Nutzer des Kennzahlen-Cockpits abgerufen werden, jedoch ist es vorteilhaft, wenn die zum Anzeigen aufbereiteten bewerteten Daten von dem Kennzahlen-Cockpit selbst in bestimmten Zeitabständen wiederholt abgerufen werden und die Anzeige entsprechend der aktuell abgerufenen aufbereiteten bewerteten Daten aktualisiert wird. Die Anzeige der Daten erfolgt dabei vorzugsweise in Echtzeit. Durch das wiederholte Abrufen der Daten und das entsprechende Aktualisieren der Anzeige ist sichergestellt, dass ein Nutzer immer aktuelle Informationen erhält. Das Arbeiten mit veralteten Informationen aufgrund etwa eines vergessenen Aktualisierens kann so zuverlässig verhindert werden.

Die ausgewählten Daten können beispielsweise aus Logfiles und Datenbankbereichen der MES-Datenbank ausgelesen werden. Dies ermöglicht es, das Funktionieren von Diensten aus der MES-Datenbank implizit über die Datenströme in den Logfiles und den Datenbankbereichen zu ermitteln. Ein direktes Überwachen der Dienste ist dann nicht erforderlich, was Ressourcen in der Datenbank schont. Das Auslesen von ausgewählten Daten aus Logfiles kann insbesondere zur Laufzeit der Logfiles erfolgen.

Die ausgewählten Daten können insbesondere absolute Datensatzzahlen und/oder aktuelle Prozessierungszeiten und/oder durchschnittliche Prozessierungszeiten umfassen. Aus diesen Daten lassen sich Informationen gewinnen, aus denen auf den Status der MES-Datenbank geschlossen werden kann.

Gemäß einem zweiten Aspekt der Erfindung wird eine Überwachungseinrichtung zum Überwachen der Leistung eines Manufacturing Execution Systems mit einer MES-Datenbank zur Verfügung gestellt. Die Überwachungseinrichtung umfasst eine Zwischendatenbank zum Zwischenspeichern von ausgewählten Daten der MES-Datenbank und ein Abfragemodul, etwa in Form eines Jobs, einer Routine oder eines Programms, das die ausgewählten Daten in bestimmten Zeitabständen aus der MES-Datenbank ausliest und die ausgelesenen Kennzahlen in der Zwischendatenbank als zwischengespeicherte Daten speichert. Weiterhin ist ein Applikationsmodul vorhanden, das auf die in der Zwischendatenbank zwischengespeicherten Daten zugreift und eine Logik enthält, die eine Bewertung der zwischengespeicherten Daten vornimmt. Ein Darstellungsmodul, das insbesondere ein Teil des Applikationsmoduls sein kann, bereitet die Bewertung zur Darstellung auf. Außerdem weist die Überwachungseinrichtung wenigstens ein Kennzahlen-Cockpit auf, welches eine Anzeigeeinheit wie beispielsweise ein Monitor, ein Tabletcomputer, etc. sowie ein Programmmodul umfasst. Das Programmmodul ist dazu ausgestaltet, die von dem Applikationsmodul aufbereitete Darstellung abzurufen und auf der Anzeigeeinheit anzuzeigen.

Mit Hilfe der erfindungsgemäßen Überwachungseinrichtung lässt sich das erfindungsgemäße Verfahren ausführen. Da das Abfragen der MES-Datenbank lediglich durch das Abfragemodul beispielsweise von einem automatisierten Job auf der Datenbank oder auf der Zwischendatenbank ausgelöst abgefragt wird, lassen sich Mehrfachzugriffe auf die produktiven Bereiche der MES-Datenbank ausschließen, sodass Datenstaus und -stopps an einer Stelle, an der das Gesamtsystem lahmgelegt werden könnte, vermieden werden können. Zudem bietet das automatische Bewerten und Aufbereiten der ausgewählten Daten durch das Applikationsmodul die Möglichkeit, dass ein Mitglied der Betriebsleitebene eine rasche Aussage über den Gesamtstatus des Manufacturing Execution Systems treffen kann.

Das Abfragemodul kann insbesondere zum Auslesen der ausgewählten Daten aus Datenbankbereichen und Logdateien der MES-Datenbank ausgestaltet sein. Außerdem kann das Abfragemodul entweder Bestandteil der Zwischendatenbank oder Bestandteil der MES-Datenbank sein.

In einer vorteilhaften Ausgestaltung der Überwachungseinrichtung enthält das Kennzahlen-Cockpit ein Aktualisierungsmodul, das dazu ausgestaltet ist, das Programmmodul in vorbestimmten Abständen zu veranlassen, die von der Applikation aufbereitete Darstellung neu abzurufen und die Anzeige der Anzeigeeinheit entsprechend zu aktualisieren. Auf diese Weise ist sichergestellt, dass ein Nutzer nicht etwa aufgrund einer vergessenen Aktualisierung mit einer veralterten Darstellung arbeitet.

Weitere Merkmale, Eigenschaften und Vorteile der vorliegenden Erfindung ergeben sich aus der nachfolgenden Beschreibung eines Ausführungsbeispiels unter Bezugnahme auf die beiliegende Figur.

Die einzige Figur zeigt die erfindungsgemäße Überwachungseinrichtung zum Überwachen der Leistung eines Manufacturing Execution Systems in einer schematischen Darstellung.

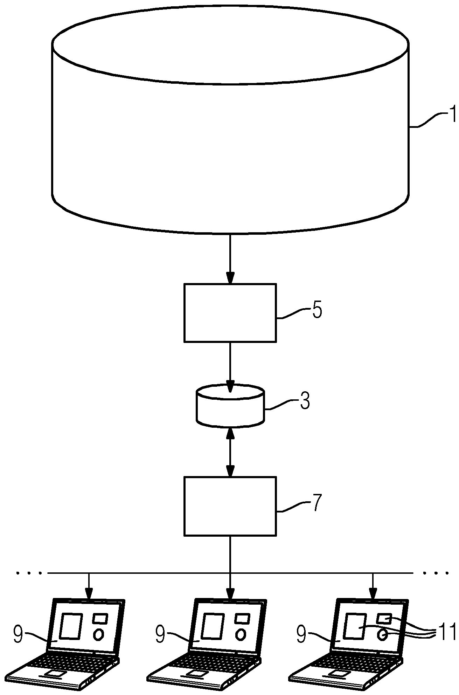

Nachfolgend wird anhand des in der Figur 1 dargestellten Ausführungsbeispiels das Überwachen der Leistung eines Manufacturing Execution Systems mit einer MES-Datenbank 1, auf welcher die Daten des Manufacturing Execution Systems gespeichert sind, beschrieben. Die MES-Datenbank 1 weist in der Regel eine Anzahl Datenbankbereiche auf und erstellt Protokolldateien (Logfiles) zu bestimmten Aktionen von Prozessen der MES-Datenbank 1. Diese Logfiles sind ebenfalls in der MES-Datenbank 1 abgelegt. Die in der MES-Datenbank 1 abgelegten Daten können von verschiedenen Prozessen bzw. Lieferanten stammen, wie zum Beispiel aus einer Betriebsdatenerfassung (BDE) oder einer Maschinendatenerfassung (MDE).

Mit der MES-Datenbank 1 ist eine performante Datenbank 3, im Folgenden Zwischendatenbank genannt, verbunden, in der aus der MES-Datenbank ausgelesene ausgewählte Daten gespeichert werden. Das Auslesen der ausgewählten Daten aus der MES-Datenbank erfolgt mittels eines Abfragemoduls 5, das in bestimmten Zeitabständen Daten oder Logfiles, vorzugsweise Daten und Logfiles, aus der MES-Datenbank zyklisch ausliest und die entsprechenden Daten in die Zwischendatenbank 3 schreibt. Die Abfragen der MES-Datenbank können bspw. entweder durch einen automatischen Job auf der MES-Datenbank selbst oder durch einen automatischen Job auf der Zwischendatenbank 3 ausgelöst werden. Dabei kann insbesondere die Möglichkeit bestehen, die Frequenz, mit der das Auslesen erfolgt, einstellbar zu gestalten. Ein typischer Auslesezyklus wird nach einer Zeitspanne, die im Bereich von Sekunden bis wenige Minuten liegt, wiederholt. Eine beispielhafte Frequenz des Auslesezyklus kann etwa 6 mal pro Minute sein, also ein Auslesen alle 10 Sekunden.

Beim Auslesen der MES-Datenbank wird in der Regel auf verschiedene MES-Datenbankbereiche und die korrespondierenden Logfiles zugegriffen. Die Datenbankbereiche und Logfiles sind dabei mit Hilfe eines Filters so ausgewählt, dass sich daraus Indikatoren zur Überwachung des gesamten MES-Systems ableiten lassen, die eine Bewertung der Performance des Systems ermöglichen. Im Rahmen des Überwachungsverfahrens werden die Logfiles auf der MES-Datenbank 1 zur Laufzeit ausgelesen und die daraus gefilterten Daten in der Zwischendatenbank 3 festgehalten.

Da lediglich das Auslesemodul 5 die MES-Datenbank abfragt, um eine Überwachung der Leistung des MES durchzuführen, werden Mehrfachzugriffe auf die produktiven Bereiche der MES-Datenbank vermieden.

Der Datentransfer zwischen der Zwischendatenbank 3 und dem Applikationsmodul 7 kann als asynchroner Datentransfer ausgestaltet sein.

Ein Applikationsmodul 7 greift auf die in der Zwischendatenbank 3 zwischengespeicherten Daten zu, um diese zu bewerten und für eine Darstellung aufzubereiten. Hierzu beinhaltet die Applikation 7 eine Logik, welche eine Bewertung der aus den MES-Datenbankbereichen und/oder der Logfiles ausgelesenen zwischengespeicherten Daten vornimmt. Dabei spielen im vorliegenden Ausführungsbeispiel absolute Datensatzzahlen genauso eine Rolle wie aktuelle und/oder durchschnittliche Prozessierungszeiten. Aus der Gesamtbewertung der Datensatzzahlen und der Prozessierungszeiten erfolgt dann eine Aussage hinsichtlich der Systemperformance. Dies soll kurz an einem Beispiel erläutert werden.

Wenn sich aus den in der Zwischendatenbank 3 zwischengespeicherten Daten ergibt, dass beispielsweise zehn offene Datensätze vorhanden sind, was eigentlich unkritisch ist, aber Prozessierungszeiten von mehreren Minuten vorliegen, erhält diese Konstellation hinsichtlich der Systemperformance den Status "kritisch". Wenn andererseits beispielsweise 1000 offene Datensätze vorhanden sind, aber die Prozessierungszeiten im Bereich von Millisekunden liegen, würde dies zu einer Bewertung hinsichtlich der Sysetmperformance mit dem Status "OK" führen.

Neben der Gesamtbewertung der in der Zwischendatenbank 3 zwischengespeicherten Daten übernimmt das Applikationsmodul 7 im vorliegenden Ausführungsbeispiel auch die Erstellung der textuellen Übersicht des Bewertungsergebnisses für die Systemperformance, beispielsweise in Form von Tabellen, wie auch das Gesamtrendering der dazugehörigen Graphiken. Die von dem Applikationsmodul 7 aufbereiteten Bewertungsdaten können ebenfalls in der Zwischendatenbank 3 beispielsweise für weitere Auswertungen im Anschluss gespeichert werden.

Ein oder mehrere Kennzahlen-Cockpits 9, die in der Figur durch einen Computermonitor mit Anzeigeelementen 11 repräsentiert sind, übernehmen die Anzeige der von dem Applikationsmodul 7 aufbereiteten Darstellung und fragen hierzu kontinuierlich bzw. quasikontinuierlich das Applikationsmodul 7 nach neuen Werten bzw. Darstellungen ab. Die Anzeige der Darstellung erfolgt dabei in Echtzeit (Realtime). Eine Aktualisierung durch den Nutzer ist dabei nicht nötig. Die Kennzahlen-Cockpits 9 fragen dabei also immer nur eine Zwischenschicht, nämlich das Applikationsmodul 7, ab und nicht die produktiven Bereiche der MES-Datenbank 1. Dadurch haben die Abfragen der laufenden Kennzahlen-Cockpits 9 keinen Einfluss auf die Gesamtperformance des MES. Auch eine große Anzahl von Kennzahlen-Cockpits 9 kann daher die Systemperformance des MES nicht beeinträchtigen.

Von Seiten des MES erfolgt im vorliegenden Ausführungsbeispiel lediglich das Überwachen der Speicherkapazitäten. Das Funktionieren verschiedener Dienste wird rein über die Datenströme in den Logfiles und auf der MES-Datenbank implizit ermittelt.

Das anhand eines Ausführungsbeispiels beschriebene erfindungsgemäße Verfahren und die anhand des Ausführungsbeispiels beschriebene erfindungsgemäße Vorrichtung ermöglichen das Ermitteln der Leistungsfähigkeit eines MES ohne Serverüberwachungsmechanismen und manuelle Prüfung der Systemprotokolle. Obwohl die Erfindung anhand eines Ausführungsbeispiels zu Illustrationszwecken beschrieben worden ist, erkennt ein Fachmann, dass andere Ausführungsvarianten der Erfindung, wie sie von den Ansprüchen umfasst sind, möglich sind. Bspw. kann das Erstellen der textuellen Übersicht und/oder das Rendern der Graphiken von eigenen, nur diesem Zweck dienenden Applikationen vorgenommen werden. Daher soll die Erfindung nicht auf die Merkmalskombination des Ausführungsbeispiels beschränkt sein, sondern lediglich durch die angehängten Ansprüche.

## Patentansprüche

1. Verfahren zum Überwachen der Leistung eines Manufacturing Execution Systems (MES) mit einer MES-Datenbank (1), in dem
- in bestimmten Zeitabständen ausgewählte Daten aus der MES-Datenbank (1) ausgelesen und in einer Zwischendatenbank (3) gespeichert werden;
- die zwischengespeicherten Daten von einer Applikation (7) aus der Zwischendatenbank (3) ausgelesen und bewertet werden;
- die bewerteten Daten für ein Anzeigen aufbereitet werden; und
- die zum Anzeigen aufbereiteten bewerteten Daten von wenigstens einem Kennzahlen-Cockpit (9) aus der Applikation (7) abgerufen und angezeigt werden.

2. Verfahren nach Anspruch 1,
in dem die zum Anzeigen aufbereiteten bewerteten Daten von wenigstens einem Kennzahlen-Cockpit (9) in bestimmten Zeitabständen wiederholt abgerufen werden und die Anzeige entsprechend der aktuell abgerufenen aufbereiteten bewerteten Daten aktualisiert wird.

3. Verfahren nach Anspruch 2,
in dem das Anzeigen zum Anzeigen aufbereiteten bewerteten Daten in Echtzeit erfolgt.

4. Verfahren nach einem der Ansprüche 1 bis 3,
in dem die ausgewählten Daten (1) aus Logfiles und Datenbankbereichen der MES-Datenbank ausgelesen werden.

5. Verfahren nach Anspruch 4,
in dem die Logfiles zur Laufzeit ausgelesen werden.

6. Verfahren nach einem der Ansprüche 1 bis 5,
in dem das Laufen von Diensten auf der MES-Datenbank (1) nur implizit über die Datenströme in den Logfiles und den Datenbankbereichen ermittelt wird.

7. Verfahren nach einem der Ansprüche 1 bis 6,
in dem in die ausgewählten Daten absolute Datensatzzahlen und/oder aktuelle Prozessierungszeiten und/oder durchschnittliche Prozessierungszeiten umfassen.

8. Verfahren nach Anspruch 7,
in dem in die Bewertung der ausgewählten Daten sowohl die absoluten Datensatzzahlen wie auch die aktuellen und/oder durchschnittlichen Prozessierungszeiten eingehen.

9. Überwachungseinrichtung zum Überwachen der Leistung eines Manufacturing Execution Systems mit einer MES-Datenbank (1), wobei die Überwachungseinrichtung umfasst:
- eine Zwischendatenbank (3) zum Zwischenspeichern von ausgewählten Daten der MES-Datenbank (1),
- ein Abfragemodul (5), das die ausgewählten Daten in bestimmten Zeitabständen aus der MES-Datenbank (1) ausliest und die ausgelesenen ausgewählten Daten in der Zwischendatenbank (3) als zwischengespeicherte Daten speichert;
- eine Applikationsmodul (7), das auf die in der Zwischendatenbank (3) zwischengespeicherten Daten zugreift und eine Logik enthält, die eine Bewertung der zwischengespeicherten Daten vornimmt,
- ein Darstellungsmodul, das die Bewertung zur Darstellung aufbereitet; und
- wenigstens ein Kennzahlen-Cockpit (9) mit einer Anzeigeeinheit und einem Programmmodul, das dazu ausgestaltet ist, die von dem Darstellungsmodul (7) aufbereitete Darstellung abzurufen und auf der Anzeigeeinheit anzuzeigen.

10. Überwachungseinrichtung nach Anspruch 9,
in dem das Abfragemodul (9) zum Auslesen der ausgewählten Daten aus Datenbankbereichen und Logdateien der MES-Datenbank (1) ausgestaltet ist.

11. Überwachungseinrichtung nach Anspruch 9 oder Anspruch 10,
in dem das wenigstens eine Kennzahlen-Cockpit (9) ein Aktualisierungsmodul enthält, das dazu ausgestaltet ist, das Programmmodul in vorbestimmten Abständen zu veranlassen, die von dem Applikationsmodul (7) aufbereitete Darstellung neu abzurufen und die Anzeige der Anzeigeeinheit entsprechend zu aktualisieren.

12. Überwachungseinrichtung nach einem der Ansprüche 9 bis 11,
in dem das Abfragemodul (5) ein Bestandteil der Zwischendatenbank (3) ist.

13. Überwachungseinrichtung nach einem der Ansprüche 9 bis 12,
in dem das Abfragemodul (5) ein Bestandteil der MES-Datenbank ist.

14. Überwachungseinrichtung nach einem der Ansprüche 9 bis 13,
in dem das Darstellungsmodul ein Teil des Applikationsmoduls (7) ist.
